# EUROPEAN PATENT SPECIFICATION

(11) **EP 1 836 041 B1**
(45) Date of publication and mention of the grant of the patent: **25.02.2009**
(21) Application number: 05821741.5
(22) Date of filing: 15.12.2005
(51) Int. Cl.: B29C 65/08, B29C 53/42, B65C 3/06

(54) **PROCESS AND DEVICE FOR AUTOMATICALLY DETERMINING THE BEGINNING OF A WELDING PROCESS FOR MAKING TUBULAR LABELS**
VERFAHREN UND VORRICHTUNG ZUR AUTOMATISCHEN BESTIMMUNG DES BEGINNS EINES SCHWEISSPROZESSES ZUR HERSTELLUNG VON RÖHRENFÖRMIGEN ETIKETTEN
PROCEDE ET DISPOSITIF POUR DETERMINER AUTOMATIQUEMENT LE DEBUT D'UNE OPERATION DE SOUDAGE LORS DE LA REALISATION D'ETIQUETTES TUBULAIRES

(30) Priority: 20.12.2004 IT PR20040094
(43) Date of publication of application: 26.09.2007
(73) Proprietor: Sidel S.p.A., 43100 Parma (IT)
(72) Inventor: ZACCHE', Vanni, Simonazzi S.P.A., 46030 Mantova (IT); MARASTONI, Daniele, Simonazzi S.P.A., 46030 Mantova (IT); PHUCHAKR, Pringpuangkeo, Simonazzi S.P.A., 46030 Mantova (IT)
(74) Representative: Gotra, Stefano
(86) International application number: PCT/EP2005/013512
(87) International publication number: WO 2006/066798

(56) References cited:
- WO-A-20/05085073
- DE-A1- 3 146 585
- GB-A- 1 071 283
- US-A- 5 415 721
- US-A1- 2001 002 614

## Description

The present invention relates to a method and device for automatically determining the beginning of a welding process that makes tubular labels of plastic film in labelling machines, according to the preamble of claims 1 and 2 respectively, and known from US 5,415, 721 A.

Particularly, reference is made to ultrasonic welding apparatuses which are mounted to labelling machines and capable to apply tubular labels on cylindrical bodies or generally on solids of revolution, the labelling machines can be of the linear or carousel type.

Turrets are mounted to said labelling machines, which compel a sonotrode (that is a welding element) to move in a way to continuously contact the area of the label where its edges overlap.

Advantageously, the device of the present invention can be mounted to a type of labelling machine which was the object of WO 2005/085073 A, published on 15 September 2005 (the Italian patent application N° PR02A000018 filed by the same applicant of the present invention).

Briefly, in the above mentioned application, it is disclosed an ultrasonic welding device which is located on a turret, said turret approaches a surface to be labelled along a predetermined axis and after, once the device contacts the area of the overlapped edges, it starts a welding operation running on the length of the area of the overlapped edges.

After the completion of the welding operation, the ultrasonic welding apparatus moves away, returning to the starting position.

The device of the present invention is mounted to a turret of the above mentioned machine and it is implemented in such a way to determine the translation and welding operation independently from the position of the edge to be welded, in other words, from the diameter of the container where the label is located.

Reference is made to an ultrasonic welding system even though the device can be mounted to every kind of devices which are based on the same operating principles to determine the instant in which the process in object must be started.

A welding process is defined by specific physical parameters, such as pressure, frequency, electric current, the rate for making the welding bead; in other words in order to provide a smooth and constant welding it is necessary that these parameters should be maintained as much as possible constant.

In order to obtain a constant and effective welding in every spot along the area where the label edges overlap, it is essential to start the process simultaneously with the translation of the welding element and when it comes in contact with the label to keep constant the above mentioned parameters.

If the above cited conditions are not satisfied, some drawbacks can occur, such as:
- welding beads incomplete with respect to the length of the overlapping area,
- weak welding beads which easily detach after the welding step.
- swelling of the welded area until the labels become perforated.

Consequences of the above said disadvantages are: not optimal welding quality and increasing number of labels and/or containers discarded.

Nowadays the technique uses mechanical means such as stops to locate on a pneumatic spring that is attached to a welding assembly, which starts the welding when it abuts the stop.

After, the mechanism is positioned again by means, such as lever mechanisms or actuators, allowing the retriggering of the control system.

With the prior art, it is necessary to move the reference stops depending on the diameter of the bottle on which the label must be applied, moreover mechanical events such as the wear of the sliding components and the increasing play between the same, make necessary a continuous and frequent maintenance to restore the proper operation of the above cited mechanical means because the plays are not automatically compensated by the same device.

To these drawbacks should be added that a manual adjustment determines downtimes of the machine, and even though each of these downtimes is very short, at the end of a day they all amount to an unacceptable value, if it is taken into consideration the high number of containers on which the same machine applies and welds the label.

In addition to that, the manual adjustment determines a higher number of rejections due to the initial adjustment step and wrong judgments in positioning the adjustment means.

The object of the present invention is to solve the above cited drawbacks by a device which determines, independently of the container diameter, the instant wherein the process for welding the label must start, moreover said device is capable to return to its initial position despite the occurrence of possible plays due to the wear of the mechanical couplings.

Consequently, whichever the contact diameter and stroke of the translating assembly may be, the presence of the intermediate guide insure the exact starting when the welding element reaches the label, keeping constant the welding parameters.

The advantages of the present invention are schematically the following:
- The welding rate is positively kept constant from the initial to the final instant.
- Uniform welding for long periods of operation of the welding machine.
- Uniform welding irrespectively the format diameter on which the label is welded and without an additional initial adjustment.
- the number of rejections is cut to zero once the machine has been initially set up for determining the correct welding parameters.
- The adjustment is not necessary even though the sonotrode and tools wear.

The above objects and advantages are fulfilled by the device for automatically determining the beginning of a welding process of the present invention, that it is characterized by the attached claims.

These and other characteristics will be better understood by the following description of some embodiments illustrated as illustrative non limiting examples in the following drawings, wherein:
- Figure 1 is a general perspective view of an automatic device for the beginning of the welding according to the present invention,
- Figure 2 show section A-A of Figure 3,
- Figure 3 is a top view of the device of Figure 1,
- Figure 4 schematically shows, in part, the assembly of a possible embodiment of the present invention to a labelling machine which uses the apparatus for ultrasonically welding tubular labels.

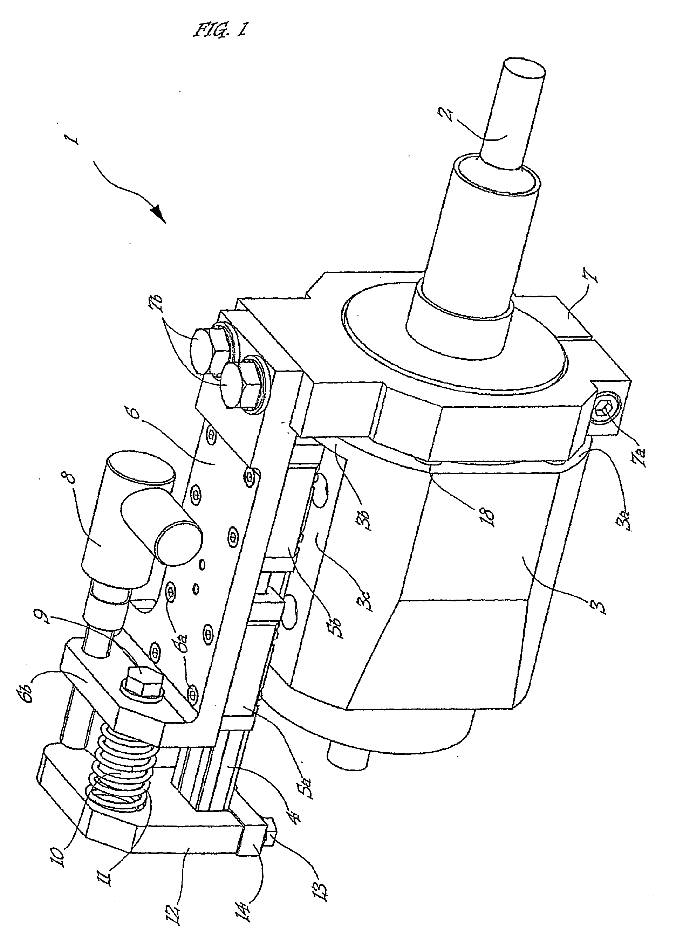

With reference to figure 1, 1 generally shows a device for automatically determining a welding step, specifically an ultrasonic welding.

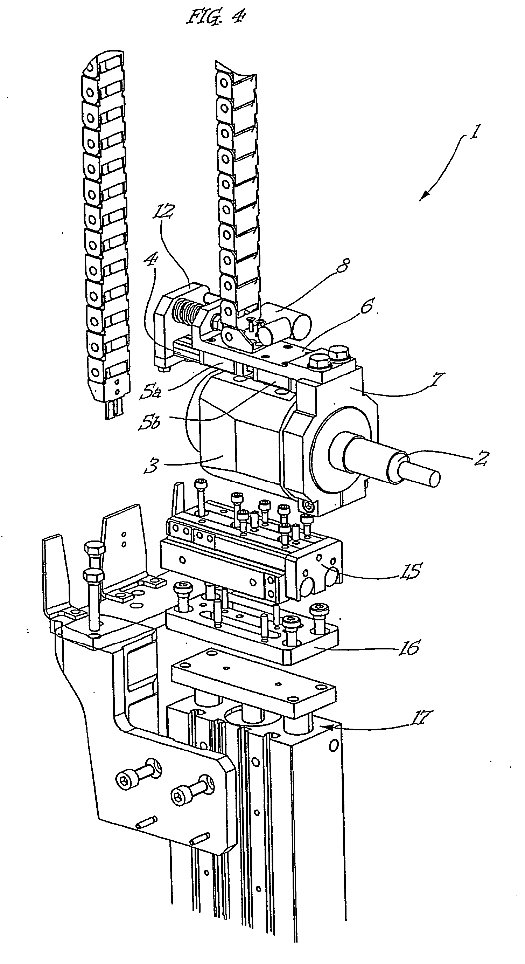

The device, as shown in figure 4, is attached to one or more turrets of a labelling machine that manufactures labels made of a thermo shrinkable film.

Every turret comprises a vertical actuator 17 to which a registering plate 16 is fixed that in turn is fixed to a horizontal actuator 15 which allows the device 1 mounted on it, to approach the label and consequently the winding drum (not illustrated) on which the label is ready to be welded.

The vertical actuator 17 is designed to provide the travel along the area of the overlapping label edges.

The portion of device 1 that is fixed to the turret (particularly to actuator 15) shown by reference 3, is a cylindrical support which receives the welding element, in this case a sonotrode 2.

The sonotrode 2 is located coaxially and concentrically in the cylindrical support 3, and is fixed to a mounting 7 by means of a tightening screw 7a.

Mounting 7 is in turn connected, by components to be described, to sliding means engaged in a straight guide 4, which in turn is connected to the cylindrical support 3.

As a consequence, the translation of the sliding means in the guide 4 causes a corresponding translation of mounting 7 and consequently of the sonotrode 2.

Said sliding means in the illustrated example are embodied by sliding shoes 5a and 5b.

The upper surface of the cylindrical support 3 is almost completely flat in order to have a bearing surface 3c to which the guide 4 is connected.

The upper surface of the cylindrical support 3 is machined only on one side of the bearing surface 3c, in order to form a ledge 3b against which the sliding shoe 5b is biased by a resilient element 11.

Specifically, sliding shoes 5a and 5b are fixed by known fasteners 6a to a disk 6 to which is also fixed the mounting 7 by screws 7b, in the end part of disk 6.

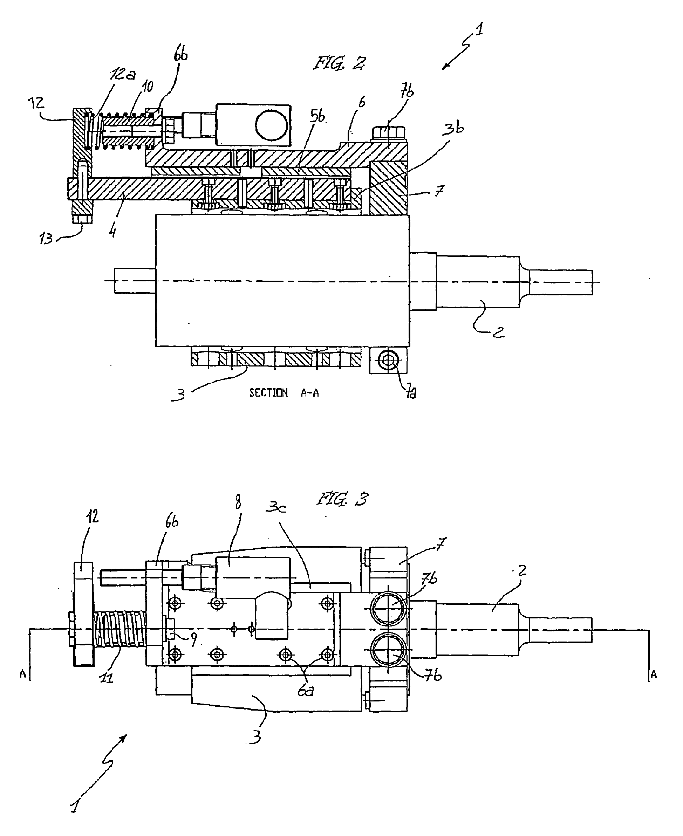

From the above description and figures 2 and 3, it is understood that sonotrode 2 is allowed to translate along its own axis because it is connected to shoes 5a and 5b which freely slide in guide 4.

The sliding motion is stopped when mounting 7 abuts the cylindrical support 3.

The device 1 comprises also other components essential for the operation of the object: a spring 11 and a sensor 8, inserted in the device 1 and adapted to reset the device in the initial position (spring 11) and to start the translation and welding step (sensor 8).

The end part of disk 6, opposite to the part on which the mounting 7 is attached, is curved and terminates with a strap 6b perpendicular to disk 6, having two holes in which a sensor 8 and a screw 9 are engaged, the latter holds a pin 10.

At a distance from strap 6b there is an end plate 12 fixed to the guide 4 by screws 13 and a small fixing bar 14.

Between the end plate 12 and the strap 6b there is a spring 11 partially inserted around pin 10 and located in a seat 12a in order to avoid its displacement during its compression.

In other words, the device can be considered as formed by two assemblies of elements reciprocally moving:
- Stationary elements fixed to the welding turret, in the example shown, they are the cylindrical support 3, guide 4 and end plate 12;
- Movable elements: which can slide with respect to said stationary elements, such as the sonotrode 2, mounting 7, disk 6 and shoes 5a and 5b.

In the example shown, sensor 8 belongs to the movable assembly of device 1.

In the following there will be described the process for automatically determining the beginning of the welding operation of a labelling machine using device 1.

The actuator 15 moves the device 1 towards a winding drum carrying the label to be welded: during this step stationary and movable elements translate of the same amount.

Once the sonotrode 2 abuts said winding drum, it is prevented from further moving by actuator 15, so that by means of shoes 5a and 5b sliding in guide 4, the assembly of movable elements (sonotrode 2, mounting 7, disk 6 and sensor 8) can remain in the shown position, leaving the assembly formed by the stationary components (cylindrical support 3, guide 4 and end plate 12) free of sliding, so that it keeps moving in said direction.

After the sonotrode 2 is in contact with the container, the distance between the end plate 12 and the strap 6b (that is between stationary elements and movable elements) decreases while spring 11 is being compressed.

As said distance comes smaller, mounting 7 approaches surface 3a of the cylindrical support 3 and sensor 8 is activated (due to the presence of the end terminal 12) starting the translation step of the actuator 17, the sonotrode 2 is certainly against the label.

The strike between the surface 3a and the cylindrical support can be cushioned by inserting one or more damping means 18.

At the end of the welding step, actuator 15 is retracted and the elements of device 1 precisely return to the initial position because spring 11, compressed when it approaches, pushes the disk 6 until the shoe 5b abuts said ledge 3b machined in the cylindrical support 3.

After the operation of the spring 11, sensor 8 turns off and returns to its standby position waiting a new process.

In the shown example of an embodiment of a device for automatically determining the welding step, reference has been made to elements defined as stationary and movable elements: it is understood that the cited definition of each element is only an illustrative example, and without falling out of the scope of the present invention as defined in the appended claims, some of the cited members indicated as stationary elements could be part of the movable elements or some of the cited members indicated as movable elements could be part of the stationary elements; particularly, the "function interchangeability" could be had for the sliding means 5a, 5b, with the guide 4, or for the sensor 8 with the end plate 12.

In the description has been made reference to a labeling machine using an ultrasonic welding apparatus for tubular labels; it is understood, that said example can be extended to any welding apparatus using instead of the sonotrode 2 another kind of welding member, and in the same way the extension can also encompasses ultrasonic and not ultrasonic welding apparatuses, which are connected and used on different kind of machines.

In the description, sensor 8 has been mentioned in a generic way, preferably it is a proximity or position sensor.

The method for automatically determining the beginning of the welding process comprises a first step of moving the sonotrode near the label to be welded till the sonotrode contacts the label to be welded.

This contact triggers the second and real welding step along a vertical travel.

It is therefore the contact of the sonotrode with the label that determines the starting of the second step.

The vertical translation ends when the welding is finished, and afterward begins the third step, when the sonotrode draws apart from the welded label and returns to the starting position.

## Claims

1. Method for automatically determining the beginning of a welding process for making tubular labels of plastic film of the type comprising a welding element, such as a sonotrode (2) for making an ultrasonic welding, attached to a welding turret of a labelling machine, **characterized by the fact that** the process is performed in three steps, a first step of approaching the sonotrode (2) to a label to be welded, a second step of welding as a result of the vertical translation of the welding element and a third step of moving away from the welded label and returning to the initial position, whereby the second step of vertical welding translation starts when the sonotrode (2) contacts the label to be welded during the first step of the process subsequently and a welding starting signal is generated by a sensor (8) actuated by a, reciprocal, sliding of a movable structure (6,7) carrying the sonotrode (2) with respect to a vertically translating support structure (3,4,12) and the consequent reduction of the distance therebetween.

2. Device for automatically determining the beginning of a welding process which makes tubular labels of a plastic film, of the type comprising a welding element, such as a sonotrode (2) for carrying out an ultrasonic welding, mounted to one or more welding turrets of a labelling machine, **characterized in that** the process is performed in three steps: a first step of approaching the sonotrode (2) to a label to be welded, a second step of vertically translating and welding along the overlapped label edges and a third step of moving away from the welded label, and **in that** it comprises:
a. stationary elements (3,4,12) integral with the welding turret, such as a cylindrical support (3) in which the sonotrode (2) slides, movable elements (6,7) slidable with respect to the stationary elements by sliding means (5a,5b) engaged in at least one guide (4); after a sliding motion and reduction of the distance between the stationary and the movable elements during the first step, a sensor (8) is activated to stop the first approaching step and generates a starting signal for the second translating and welding step ;
b. elastic means (11) located between the stationary (3,4,12) and movable (6,7) elements and they are compressed by the sliding motion of the welding turret after the sonotrode (2) abuts the label to be welded.

3. Device according to claim 2, **characterized by the fact that** the elastic means (11) pushing the movable elements (6,7) bring back the device (1) to the initial position when the device is moved away from the welded label.

4. Device according to claim 2, **characterized by the fact that** the sliding means (5a,5b) can be part of the movable elements or stationary elements depending on how the guide (4) is fixed.

5. Device according to claims 2 and 4, **characterized by the fact that** the sliding means can be two or more shoes (5a, 5b), two or more bushes, two or more bearings engaging the guide (4).

6. Device according to claims 2 and 3, **characterized by the fact that** it comprises a stopping element or an abutment surface (3c), being part of the stationary elements, for stopping the movable elements during their return stroke, urged by the elastic means (11).

7. Device according to claim 2 and 3, **characterized by the fact that** the elastic means can be an air or mechanical spring (11).

8. Device according to claim 2 and 3, **characterized by the fact that** the sensor (8) can be part of the movable elements or stationary elements.

## Patentansprüche

1. Verfahren zur automatischen Bestimmung des Beginns eines Schweißprozesses zur Herstellung von röhrenförmigen Etiketten aus Kunststofffolie, umfassend ein Schweißelement, wie eine Sonotrode (2), zur Durchführung einer Ultraschallschweißung, das an einem Schweißkopf eines Etikettierers angebracht ist, **dadurch gekennzeichnet, dass** der Prozess in drei Phasen erfolgt, einer ersten Phase, in der die Sonotrode (2) an ein zu schweißendes Etikett angenähert wird, einer zweiten Schweißphase als Ergebnis der vertikalen Verfahrung des Schweißelements und einer dritten Phase, in der die Entfernung vom verschweißten Etikett und die Rückkehr an die Ausgangsposition erfolgen, wobei die zweite Phase der vertikalen Schweißverfahrung startet, wenn die Sonotrode (2) das während der ersten Prozessphase zu verschweißende Etikett berührt und danach ein Schweißstartsignal durch einen Sensor (8) generiert wird, der über ein gegenseitiges Verfahren einer beweglichen Konstruktion (6, 7), die die Sonotrode (2) trägt zu einer vertikal verfahrenden Haltekonstruktion (3, 4, 12) und die dementsprechende Verkürzung des Abstands dazwischen erregt wird.

2. Vorrichtung zur automatischen Bestimmung des Beginns eines Schweißprozesses zur Herstellung von röhrenförmigen Etiketten aus einer Kunststofffolie, umfassend ein Schweißelement, wie eine Sonotrode (2), zur Durchführung einer Ultraschallschweißung, montiert auf einem oder mehreren Schweißköpfen eines Etikettierers, **dadurch gekennzeichnet, dass** der Prozess in drei Phasen erfolgt: einer ersten Phase zur Annäherung der Sonotrode (2) an das zu schweißende Etikett, einer zweiten Phase der vertikalen Verfahrung und des Verschweißens an den überlappten Etikettenrändern und einer dritten Phase der Entfernung vom verschweißten Etikett, Folgendes umfassend:
a. feste Elemente (3, 4, 12), die in den Schweißkopf integriert sind, wie eine zylindrische Halterung (3), in der die Sonotrode (2) verfährt, bewegliche Elemente (6, 7), die anhand von Schiebemitteln (5a, 5b), die an mindestens einer Führung (4) befestigt sind, bezüglich der festen Elemente verschoben werden können; nach der Schiebebewegung und der Verkürzung des Abstands zwischen den festen und den beweglichen Elementen während der ersten Phase wird ein Sensor (8) erregt, um die erste Annäherungsphase zu stoppen, und generiert ein Startsignal für die zweite Verfahr- und Schweißphase;
b. elastische Mittel (11), die zwischen den festen (3, 4, 12)und den beweglichen (6, 7) Elementen angeordnet sind und durch die Verfahrung des Schweißkopfs zusammengedrückt werden, nachdem die Sonotrode (2) am zu verschweißenden Etikett anliegt.

3. Vorrichtung nach Anspruch 2, **dadurch gekennzeichnet, dass** die elastischen Mittel (11) die beweglichen Elemente (6, 7) schieben und dadurch die Vorrichtung (1) wieder an die Ausgangsposition fahren, wenn die Vorrichtung vom verschweißten Etikett entfernt wird.

4. Vorrichtung nach Anspruch 2, **dadurch gekennzeichnet, dass** die Schiebemittel (5a, 5b) Teil der beweglichen Elemente oder der festen Elemente sein können, je nach dem, wie die Führung (4) fixiert ist.

5. Vorrichtung nach den Ansprüchen 2 und 4, **dadurch gekennzeichnet, dass** die Schiebemittel ein oder mehrere Schuhe (5a, 5b), zwei oder mehrere Buchsen, zwei oder mehrere Lager, die an der Führung befestigt sind, sein können.

6. Vorrichtung nach Anspruch 2 und 3, **dadurch gekennzeichnet, dass** sie ein Arretierelement oder eine Anschlagfläche (3c) als Teil der festen Elemente umfasst, um die beweglichen Elemente während ihres durch die elastischen Mittel (11) bewirkten Zurückfahrens zu stoppen.

7. Vorrichtung nach den Ansprüchen 2 und 3, **dadurch gekennzeichnet, dass** die elastischen Mittel eine Luftfeder oder eine mechanische Feder (11) sein können.

8. Vorrichtung nach den Ansprüchen 2 und 3, **dadurch gekennzeichnet, dass** der Sensor (8) Teil der beweglichen Elemente oder der festen Elemente sein kann.

## Revendications

1. Méthode pour déterminer automatiquement le début d'une opération de soudage lors de la réalisation d'étiquettes tubulaires en pellicule plastique, du type comprenant un élément de soudage, comme une sonotrode (2) pour produire un soudage par ultrasons, attachée à une tourelle de soudage d'une étiqueteuse, **caractérisé en ce que** le procédé se compose de trois étapes, dont une première étape consistant à rapprocher la sonotrode (2) d'une étiquette à souder, une deuxième étape consistant à souder après la translation verticale de l'élément de soudage, et une troisième étape consistant à s'éloigner de l'étiquette soudée et à se remettre en position initiale, dans laquelle la deuxième étape de translation verticale de soudage commence lorsque la sonotrode (2) touche l'étiquette à souder pendant la première étape du procédé et qu'un signal de départ de soudage est ensuite émis par un capteur (8) activé par un coulissement réciproque d'une structure mobile (6, 7) comprenant la sonotrode (2) par rapport à une structure support de translation verticale (3, 4, 12) et la réduction conséquente de la distance entre elles.

2. Dispositif pour déterminer automatiquement le début d'une opération de soudage réalisant des étiquettes tubulaires en pellicule plastique, du type comprenant un élément de soudage, comme une sonotrode (2) pour effectuer un soudage par ultrasons, montée sur une ou plusieurs tourelles de soudage d'une étiqueteuse, **caractérisé en ce que** le procédé se compose de trois étapes : une première étape consistant à rapprocher la sonotrode (2) d'une étiquette à souder, une deuxième étape de translation verticale et de soudage sur les bords superposés de l'étiquette, et une troisième étape consistant à s'éloigner de l'étiquette soudée, et **en ce qu'**il comprend :
a. des éléments immobiles (3, 4, 12) incorporés à la tourelle de soudage, comme un support cylindrique (3) dans lequel la sonotrode (2) coulisse, des éléments mobiles (6, 7) qui se déplacent par rapport aux éléments immobiles par des moyens de coulissement (5a, 5b) engagés dans une coulisse au moins (4) ; après le coulissement et la réduction de la distance entre les éléments immobiles et mobiles pendant la première étape, un capteur (8) est activé pour interrompre la première étape d'approche, puis émet un signal de départ pour la deuxième étape de translation et de soudage ;
b. des moyens élastiques (11) situés entre les éléments immobiles (3, 4, 12) et mobiles (6, 7), qui sont comprimés par le coulissement de la tourelle de soudage lorsque la sonotrode (2) touche l'étiquette à souder.

3. Dispositif selon la revendication 2, **caractérisé en ce que** la poussée exercée par les moyens élastiques (11) sur les éléments mobiles (6, 7) ramène le dispositif (1) à sa position initiale, lorsqu'il s'éloigne de l'étiquette soudée.

4. Dispositif selon la revendication 2, **caractérisé en ce que** les moyens de coulissement (5a, 5b) peuvent faire partie soit des éléments mobiles, soit des éléments immobiles, selon la fixation de la coulisse (4).

5. Dispositif selon les revendications 2 et 4, **caractérisé en ce que** les moyens de coulissement peuvent consister en deux ou plusieurs patins (5a, 5b), en deux ou plusieurs coussinets, en deux ou plusieurs appuis s'engageant dans la coulisse (4).

6. Dispositif selon les revendications 2 et 3, **caractérisé en ce qu'**il comprend une butée ou une surface d'arrêt (3c), faisant partie des éléments immobiles, pour arrêter les éléments mobiles lors de leur course de retour provoquée par les moyens élastiques (11).

7. Dispositif selon les revendications 2 et 3, **caractérisé en ce que** les moyens élastiques peuvent consister en un ressort pneumatique ou mécanique (11).

8. Dispositif selon les revendications 2 et 3, **caractérisé en ce que** le capteur (8) peut faire partie des éléments mobiles ou immobiles.
